# EUROPEAN PATENT APPLICATION

(11) **EP 3 683 030 A1**
(43) Date of publication of application: **22.07.2020**
(21) Application number: 19755193.0
(22) Date of filing: 12.02.2019
(51) Int. Cl.: B29C 44/34, B29K 23/00, B29K 105/04

(54) **METHOD FOR PRODUCING LOW SPECIFIC GRAVITY MOLDED FOAM BY USING PROPYLENE-BASED POLYMER**

(30) Priority: 13.02.2018 KR 20180017710
(71) Applicant: Fine Chemical Co., Ltd., Gimhae-si, Gyeongsangnam-do 50870 (KR)
(72) Inventor: LEE, Sung Yull, Busan 47732 (KR)
(74) Representative: Prüfer & Partner mbB Patentanwälte · Rechtsanwälte
(86) International application number: PCT/KR2019/001670
(87) International publication number: WO 2019/160293

(57) **Abstract**

Provided is a method for producing a low specific gravity molded foam using a propylene-based polymer. The method includes: providing a foamable composition including a mixture of a propylene-based polymer and thermally expandable microspheres; introducing the foamable composition into a mold for producing a molded foam; raising the temperature of the foamable composition to at least the expansion start temperature (Tₛₜₐᵣₜ) of the thermally expandable microspheres to expand the foamable composition in the mold; forming a molded foam in a state in which the foamable composition is expanded to fill the mold; and releasing the molded foam from the mold.

## Description

### Technical Field

The present disclosure relates to a method for producing a low specific gravity molded foam, and more specifically to a method for producing a low specific gravity molded foam using a propylene-based polymer.

### Background Art

Generally, propylene polymer molded foams are produced by the following methods.

According to the first method, a blowing agent-containing propylene polymer as a raw material is fed into a hopper of a plastic molding machine and is simply injection molded in a cold mold or injection molded while the volume of a mold cavity is increasing at a constant rate.

According to the second method, a propylene polymer as a raw material is fed into a hopper of a plastic molding machine in which a gas injection hole is formed at a predetermined portion of a cylinder, and is injection molded in a cold mold while supercritical CO₂ gas is introduced into the cylinder through the gas injection hole.

The third method is based on a bead foam process. A molded foam produced by this method is usually referred to as "expanded polypropylene (EPP)". According to the bead foam process, a propylene polymer is extruded into 0.2-1.5 mm diameter mini-pellets (also called "beads"), the mini-pellets are loaded into a high pressure tank filled with a predetermined amount of an inert gas, a high pressure is applied to allow the inert gas to penetrate the mini-pellets. Then, the pellets are expanded with steam in a pre-expander to produce a prefoam having a specific gravity as low as 0.02-0.06, the prefoam is introduced into a steam chest mold of a molding machine, steam and air pressure are simultaneously applied to melt the surface of the mini-pellets such that the pellets adhere together and fill the mold cavity. Then, the steam and air are eliminated, cooling air is introduced to cool the product, and the final product is demolded to obtain EPP.

However, the first method achieves only a limited degree of foaming (10-20%) and fails to provide a sufficient degree of foaming. Another problem of the first method is that the internal cell structure is not regular, resulting in non-uniform physical properties. For these reasons, the first method is not currently in use.

The second method ensures a uniform cell structure and an attractive appearance of a foamed product, but is inefficient in increasing the foaming magnification. Thus, the second method is not suitable for manufacturing products having a density of 0.5 g/cc or less and is only applicable to limited products.

Expanded polypropylene (EPP) produced by the third method based on a bead foam process is used as a shock absorbing material in various applications such as automobile bumpers and motorcycle helmets, but is difficult to mold and handle and is expensive, which greatly limits its commercial applications. For reference, expanded polystyrene (EPS) in the form of beads has a good ability to capture an internal gas. Due to this ability, expanded polystyrene is supplied in the form of beads to steam chest molding companies where the supplied expanded polystyrene is pre-expanded before use. In contrast, EPP in the form of beads has a poor ability to capture an internal gas. Accordingly, EPP suppliers pre-expand the as-produced EPP and supply the pre-expanded EPP in the form of low specific gravity prefoams to steam chest molding companies, resulting in an increase in the transportation cost of the raw material compared to that of EPS. The bead foams have many risk factors such as handling of high-pressure gas. Thus, most large factories supply large quantities of beads but small and medium-sized companies suffer from difficulties in manufacturing products with different physical properties from various materials because they are unable to directly handle and use the materials. Since the highest accessible temperature with steam does not exceed a maximum of 150 °C on account of the characteristics of steam chest molding, general polypropylene cannot be used and only random copolymers having a melting point of 150 °C or less can be used, making it impossible to manufacture high hardness products. Further, the use of random copolymers only necessitates a long time for sufficiently melting the surface of prefoams upon steam chest molding, leading to an increase in manufacturing cost. A reduction in melding time leads to insufficient melting, causing many problems such as low strength of molded foams.

### Detailed Description of the Invention

### Means for Solving the Problems

According to one aspect of the present disclosure, there is provided a method for producing a low specific gravity molded foam using a propylene-based polymer, including: providing a foamable composition including a mixture of a propylene-based polymer and thermally expandable microspheres; introducing the foamable composition into a mold for producing a molded foam; raising the temperature of the foamable composition to at least the expansion start temperature (Tₛₜₐᵣₜ) of the thermally expandable microspheres to expand the foamable composition in the mold; forming a molded foam in a state in which the foamable composition is expanded to fill the mold; and releasing the molded foam from the mold.

According to a further aspect of the present disclosure, there is provided a molded foam having a specific gravity of 0.3 or less produced by the method.

### Brief Description of the Drawings

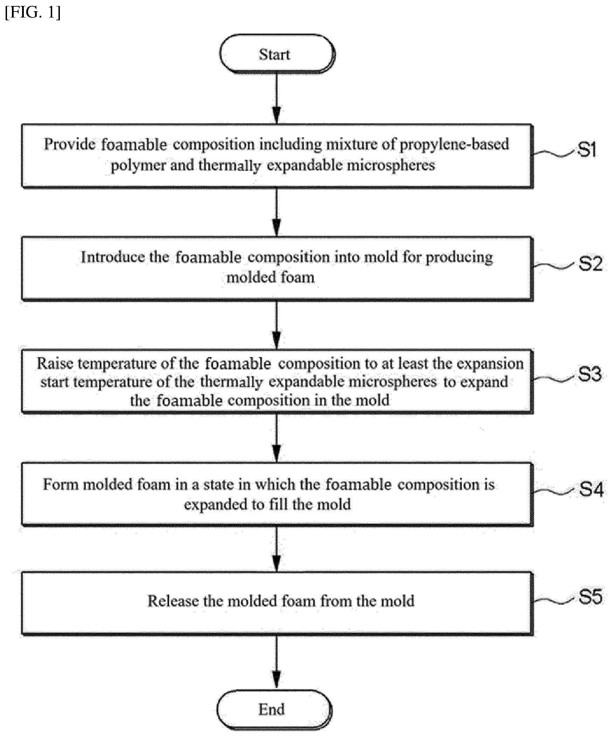

FIG. 1 is a flowchart illustrating one embodiment of a method for producing a low specific gravity molded foam using a propylene-based polymer.

### Mode for Carrying out the Invention

The present disclosure will now be described in more detail.

Propylene-based polymers are suitable for many applications such as packaging, textiles, automobiles, laboratory equipment, and pipes. Propylene-based polymers exhibit various properties such as high modulus, tensile strength, stiffness, and heat resistance. These properties make the propylene-based polymers very attractive in many applications such as molded foams.

One aspect of the present disclosure provides a method for producing a low specific gravity molded foam using a propylene-based polymer. FIG. 1 is a flowchart illustrating one embodiment of a method for producing a low specific gravity molded foam using a propylene-based polymer. Referring to FIG. 1, in step S1, a foamable composition including a mixture of a propylene-based polymer and thermally expandable microspheres is provided.

The propylene-based polymer is obtained by polymerization of propylene as a monomer. Specifically, the propylene-based polymer may be a propylene homopolymer. Alternatively, the propylene-based polymer may be a copolymer of polypropylene and other α-olefins. In this case, the polypropylene contains a propylene monomer as a major component for structural units.

The copolymer is preferably a random or block copolymer obtained by polymerization of propylene with one or more different α-olefins exemplified below. The α-olefin components copolymerizable with propylene are C₂-C₈ α-olefins, for example ethylene or preferably C4 or more α-olefins, for example 1-butene, 1-pentene, 1-hexene or 4-methyl-1-pentene.

The melt index (MI) of the propylene-based polymer is in the range of 1.0 to 50 g/10 minutes, preferably 1.0 to 30 g/10 minutes, more preferably 2.0 to 25 g/10 minutes, as measured by ASTM D1238 (190 °C, 2.16 kg). The melt index of the propylene-based polymer is particularly preferably in the range of 2.0 to 20 g/10 minutes. When a propylene-based polymer is melt-kneaded using suitable equipment such as an extruder, a higher melt index of the propylene-based polymer usually leads to a lower load of the equipment. If the melt index of the propylene-based polymer is lower than the lower limit defined above, too high a pressure is applied to a processing machine, causing a severe load in the machine. Further, a very small amount of the composition is extruded per unit time, which is economically disadvantageous. Meanwhile, if the melt index of the propylene-based polymer exceeds the upper limit defined above, the viscosity of the composition is low, resulting in an excessively high tackiness of the mixture immediately after passing through an extrusion die. In this case, the extrudate is not readily cut, making it difficult to pelletize the extrudate in the subsequent step. The resin composition may optionally further include one or more additives. Also in this case, it is preferable to control the melt index of the resin composition to the range defined above for the same reason.

The propylene-based polymer may have a specific gravity of 0.89 to 0.92. The melting point of the propylene homopolymer measured by differential scanning calorimeter (DSC) according to ASTM D3418 may be 160 to 170 °C. The melting point of the propylene copolymer measured by differential scanning calorimeter (DSC) according to ASTM D3418 may be 145 to 165 °C. The Vicat softening point of the propylene homopolymer may be 150 to 157 °C, as measured by ASTM D1525. The Vicat softening point of the propylene copolymer may be 135 to 153 °C, as measured by ASTM D1525. The Rockwell hardness of the propylene homopolymer (R scale) may be 95 to 100, as measured by ASTM D785. The Rockwell hardness (R scale) of the propylene copolymer may be 85 to 107, as measured by ASTM D785.

The thermally expandable microspheres used in the method of the present disclosure are polymer particles that encapsulate an expandable hydrocarbon compound therein. The expandable hydrocarbon compound is generally in the form of a powder at room temperature but is volatilized or thermally decomposed to generate a gas above a predetermined temperature, forming pores in the thermally expandable microspheres. The polymer expands to form shells. The polymer is not broken due to its high softness and elasticity. If the thermally expandable microspheres rupture during expansion, a gas escapes from the thermally expandable microspheres during molding of the foamable composition and is finally lost, with the result that little or no expansion occurs. Excellent surface characteristics can be attained when the polymer is not broken.

The thermally expandable microspheres are expanded by heating during molding of the foamable composition. An expanded molded product obtained from the foamable composition including the thermally expandable microspheres can be formed as a foamed body.

Preferably, the boiling point of the expandable hydrocarbon compound is not higher than the softening temperature of the shells, for example, about 100 °C or less, at which the shell-forming polymer is not dissolved in the expandable hydrocarbon compound. A liquid material with low boiling point, also called a volatile blowing agent, is usually used as the expandable hydrocarbon compound. Alternatively, a solid material capable of generating a gas when thermally decomposed may be used as the expandable hydrocarbon compound.

Examples of suitable liquid materials include C₃-C₈ straight-chain aliphatic hydrocarbons and their fluorinated products, C₃-C₈ branched aliphatic hydrocarbons and their fluorinated products, C₃-C₈ alicyclic hydrocarbons and their fluorinated products, ether compounds having C₂-C₈ hydrocarbon groups, or the ether compounds in which some hydrogen atoms of the hydrocarbon groups are substituted with fluorine atoms. Specific examples of such liquid materials include propane, cyclopropane, butane, cyclobutane, isobutane, pentane, cyclopentane, neopentane, isopentane, hexane, cyclohexane, 2-methylpentane, 2,2-dimethylbutane, heptane, cycloheptane, octane, cyclooctane, methylheptanes, trimethylpentane, 1-pentene, 1-hexene, and hydrofluoroethers such as C₃F₇OCH₃, C₄F₉OCH₃ and C₄F₉OC₂H₅. These liquid materials may be used alone or as a mixture of two or more thereof. The liquid material is preferably a hydrocarbon having a boiling point lower than 60 °C at atmospheric pressure. Isobutane is preferred as the liquid material in the hollow microspheres. The solid material may be azobisisobutyronitrile (AIBN) that is thermally decomposed into a gas.

The content of the expandable hydrocarbon compound encapsulated in the thermally expandable microspheres is not particularly limited and may vary depending on the intended use. For example, the content of the encapsulated expandable hydrocarbon compound may be about 0.5 to about 15% by weight, preferably about 1 to about 10% by weight, based on the total weight of the thermally expandable microspheres. The thermally expandable microspheres may generally be prepared by mechanically dispersing a mixture containing a polymerizable monomer, a blowing agent and the like in an incompatible liquid such as water, followed by suspension polymerization of the monomer droplets.

The thermally expandable microspheres of the foamable composition may have an average particle diameter in the range of about 5 to about 60 µm, for example, about 10 to about 50 µm or about 20 to about 35 µm, before expansion. Within this range, the thermally expandable microspheres form shells having an appropriate thickness without rupture during expansion and their thermal expansion behavior can be promoted. The expansion start temperature (Tₛₜₐᵣₜ) and maximum expansion temperature (Tmax) of the thermally expandable microspheres can be determined depending on the boiling point of the expandable hydrocarbon compound and the glass transition temperature (T_{g}) of the shell-forming polymer.

The polymer capable of forming a shell, i.e., the shell-forming polymer upon expansion may basically be any thermoplastic resin that can be softened to expand the gas therein at the expansion start temperature. Specifically, the shell-forming polymer may be an acrylic resin, a vinylidene chloride resin, an acrylonitrile resin, an ABS resin, polyethylene, polyethylene terephthalate, polypropylene, polystyrene, a vinyl chloride resin, an acetal resin, a cellulose ester, cellulose acetate, a fluorinated resin, polymethylpentene or a mixture thereof but is not limited thereto. The shell-forming polymer may be, for example, a polymer or copolymer including at least one monomer selected from the group consisting of, but not limited to, acrylonitrile, methacrylonitrile, methyl methacrylate, methyl acrylate, ethyl acrylate, propyl acrylate, n-butyl acrylate, isobutyl acrylate, t-butyl acrylate, 2-ethylhexyl acrylate, n-octyl acrylate, lauryl acrylate, stearyl acrylate, 2-hydroxyethyl acrylate, polyethylene glycol acrylate, methoxypolyethylene glycol acrylate, glycidyl acrylate, dimethylaminoethyl acrylate, diethylaminoethyl acrylate, vinylidene chloride, butadiene, styrene, p- or m-methylstyrene, p- or m-ethylstyrene, p- or m-chlorostyrene, p- or m-chloromethylstyrene, styrene sulfonic acid, p- or m-t-butoxystyrene, vinyl acetate, vinyl propionate, vinyl butyrate, vinyl ether, allyl butyl ether, allyl glycidyl ether, unsaturated carboxylic acids, including (meth)acrylic acid or maleic acid, and alkyl (meth)acrylamides. The polymer can be suitably selected according to the intended purpose such as its softening temperature, heat resistance, and chemical resistance. For example, the polymer may be a copolymer including vinylidene chloride that has excellent gas barrier properties. Alternatively, the polymer may be a copolymer including at least about 80% by weight of a nitrile monomer that is excellent in heat resistance and chemical resistance. Since the propylene-based polymer used in the composition of the present disclosure has a high boiling point, it is preferred for high-temperature processing that the shells of the thermally expandable microspheres are composed of an acrylic copolymer (*i.e.* an acrylonitrile copolymer) of a nitrile monomer and a (meth)acrylate monomer as major components.

The composition may include 1 part by weight to 20 parts by weight, preferably 3 parts by weight to 15 parts by weight of the thermally expandable microspheres, based on 100 parts by weight of the propylene polymer. If the content of the thermally expandable microspheres is less than the lower limit defined above, sufficient foaming cannot be achieved. Meanwhile, if the content of the thermally expandable microspheres exceeds the upper limit defined above, excessive foaming may occur, and as a result, the strength of a final molded foam may be lowered, causing problems in use.

The composition may include further one or more additives selected from the group consisting of metal oxides and antioxidants that are commonly used for the production of a foamed body to assist in improving the processing properties and to improve the physical properties of the foamed body.

The additives may be used in an amount of 0.01 to 5 parts by weight, based on 100 parts by weight of the propylene-based polymer. The metal oxide can be used to improve the physical properties of a foamed body, and examples thereof include zinc oxide, titanium oxide, cadmium oxide, magnesium oxide, mercury oxide, tin oxide, lead oxide, and calcium oxide. The metal oxide may be used in an amount of 1 to 4 parts by weight, based on 100 parts by weight of the propylene-based polymer. Examples of the antioxidants include Sonnoc, butylated hydroxy toluene (BHT), and Songnox 1076 (octadecyl-3,5-di-tert-butyl hydroxy hydrocinnamate). The antioxidant may be used in an amount of 0.25 to 2 parts by weight, based on 100 parts by weight of the propylene-based polymer.

The foamable composition may be prepared by extrusion of the mixture with a suitable extruder, for example, a Buss kneader, a single screw extruder or a twin screw extruder. Various products can be manufactured by changing the processing conditions of the extruder, such as screw configuration, temperature setting, screw rotation speed, and extrusion output.

The mixture is introduced through a hopper of the extruder, transferred by a screw, and melted/mixed in a cylinder of the extruder. The cylinder is heated to such a temperature that the molten mixture is suitably flowable. It is preferred that the temperature of the cylinder is controlled between a temperature equal to or higher than the melting point of the propylene-based polymer and a temperature equal to or lower than the Tₛₜₐᵣₜ of the thermally expandable microspheres. An excessively high temperature of the cylinder leads to excessive expansion of the thermally expandable microspheres, with the result that pellets obtained by extrusion are foamed, failing to achieve the intended purpose. The temperature of the cylinder is typically from 150 to 180 °C and may vary depending on the kind of the propylene-based polymer. The screw rotation speed and the extrusion output can be appropriately controlled depending on the specific gravity and shape of the foamed extrudate. The processing conditions may be varied as needed.

As a result of the extrusion, the propylene-based polymer can be homogenized with the thermally expandable microspheres. The extrusion and cutting allow the foamable composition to have appropriate dimensions for subsequent processing in a mold. The extruded foamable composition may be in the form of pellets, rods or sheets. The foamable composition is preferably extruded into pellets that can be used to produce molded foams of various shapes. The dimensions of the pellets obtained by the extrusion can be determined depending on the specification and shape of the extruder die. The smallest one of the dimensions (diameter, thickness, and length) of the pellets may be in the range of 0.1 to 10 mm, preferably 1 to 5 mm. Within this range, the pellets adhere together well during molding and a foaming efficiency of the pellets may be excellent.

The extruded foamable composition may remain unfoamed or may be only slightly foamed. The density of the extrudate is 0.50 g/cm³ or more, which is preferred for ease of subsequent foaming in a mold. For example, the density of the extrudate may be 0.50 to 0.90 g/cm³, preferably 0.7 to 0.9 g/cm³. If the extrudate has a specific gravity lower than the lower limit defined above, the thermal conductivity of the extrudate is low, resulting in insufficient foaming or requiring a long time for sufficient foaming during subsequent molding.

The expansion start temperature (Tₛₜₐᵣₜ) of the thermally expandable microspheres is higher than the melting point of the propylene-based polymer measured by DSC, which is preferable for efficient foaming.

The expansion start temperature of the thermally expandable microspheres is preferably higher than the extrusion temperature such that the mixture of the propylene-based polymer and the thermally expandable microspheres remains unfoamed during extrusion. For slight prefoaming, the expansion start temperature of the thermally expandable microspheres may be lower by 5 °C or less than the extrusion temperature, if needed.

The expansion start temperature of the thermally expandable microspheres may be about 130 to about 220 °C, for example, about 140 to about 200 °C. The maximum expansion temperature of the thermally expandable microspheres may be about 150 to about 280 °C, for example, about 170 to about 270 °C. The expansion start temperature and the maximum expansion temperature can be appropriately selected according to the intended applications.

The thermally expandable microspheres may be expanded about 10- to about 100-fold, for example, about 30- to about 60-fold, relative to their initial volume at the maximum expansion temperature. When the foamable composition including the thermally expandable microspheres is heated, the thermally expandable microspheres are expanded and the resulting molded product includes the expanded thermally expandable microspheres. The volume of the thermally expandable microspheres in the molded product may be about 10 to about 50 times, for example, about 20 to about 40 times, larger than that before expansion.

The expanded thermally expandable microspheres are ultralight hollow microspheres, contributing to a reduction in the weight of a final product. In addition, the inherent high elasticity of the expanded thermally expandable microspheres can maintain and enhance the mechanical strength of a final product. Unlike general blowing agents, the thermally expandable microspheres form microscopic closed cells having a uniform size in a product after expansion, resulting in an improvement in the surface characteristics of a final product. The elasticity of the closed cells can also contribute to the prevention of shrinkage of a final product.

In step S2, the foamable composition is introduced into a mold for producing a molded foam. The foamable composition is preferably introduced in an amount to fill 30% or less, for example, 5 to 30%, of the volume of the mold. When the amount of the foamable composition used for molding is within the range defined above, a molded foam having a specific gravity as low as 0.3 or less can be obtained, and a shape corresponding to the shape of the mold can be produced. The specific gravity of 0.3 or less is suitable for low specific gravity applications. If more than 30% of the volume of the mold is filled with the foamable composition, the specific gravity of a final molded foam exceeds 0.3, deteriorating the practicality of the molded foam.

The foamable composition introduced into the mold may remain unfoamed or may be only slightly foamed. The specific gravity of the only slightly foamed foamable composition may be at least 51%, for example, 51 to 95% of that of the unfoamed one. The specific gravity of the only slightly foamed foamable composition may be 0.5 to 0.8. The foamable composition starting from unfoamed particles or only slightly foamed particles may be rapidly expanded during foaming processing in the mold due to its good thermal conductivity. If the specific gravity of the composition is lower than the lower limit defined above, the composition conducts heat less efficiently, resulting in insufficient foaming. In this case, the expanded product does not fill the mold and is thus likely to be defective.

In step S3, the temperature of the foamable composition is raised to at least the expansion start temperature (Tₛₜₐᵣₜ) of the thermally expandable microspheres to expand the foamable composition in the mold.

The temperature of the foamable composition can be raised by directly or indirectly heating the mold with a heat source. For example, the mold may be heated with electricity as a heat source. The electric heating sufficiently raises the temperature of the mold so that the inexpensive raw material with high hardness, such as a propylene homopolymer, can be used to manufacture cost-competitive products with different hardness values.

The mold may be heated to a temperature higher than 190 °C but lower than 230 °C, for example, a temperature between 191 and 229 °C, preferably a temperature between 195 and 225 °C. The heating temperature may vary depending on the kinds of the raw materials and the specific gravity of the foamable composition. If the temperature of the mold is less than the lower limit defined above, sufficient foaming cannot be achieved. Meanwhile, if the temperature of the mold exceeds the upper limit defined above, there is a risk that a final molded foam may deform, discolor or shrink.

In one preferred embodiment, it is preferable to keep the inside of the mold in a vacuum state during expansion of the foamable composition. When the mold is evacuated to a vacuum, the expansion of the thermally expandable microspheres is promoted and facilitated by the vacuum once initiated. The vacuum can increase the expansion magnification of the thermally expandable microspheres. As a consequence, a well-foamed low specific gravity expansion product can be obtained without using a large amount of the thermally expandable microspheres to fill the mold. For example, the amount of the thermally expandable microspheres may be reduced by at least 20% when the mold is evacuated compared to when the mold is not evacuated.

A vacuum press as a pressurization device of a molding machine can be used to maintain the vacuum in the mold. A vacuum is created between heating plates of the press and the mold is located between the heating plates. When a general press is used as the pressurization device, a vacuum channel is formed in the vicinity of the mold cavity and a connector of a vacuum pump is connected to an outlet of the vacuum channel.

In step S4, a molded foam is formed in a state in which the foamable composition is expanded to fill the mold. In this step, the molding temperature is maintained in a state in which the mold is substantially completely filled with the foamable composition to complete the molded foam, such that the volume ratio of the mold to the molded foam is 1:1 to 1:1.1. The molding can be performed for 5 to 40 minutes, for example, while controlling the temperature of the mold and the degree of vacuum depending on the size and thickness of the final product. Since the thermal conduction efficiency may vary depending on the molding temperature and the specific gravity of the extrudate, these conditions can be controlled to shorten the molding time regardless of the shape of the product. The molding time may vary depending on the size and thickness of the final product but is preferably about 10 minutes when productivity is taken into account.

In step S5, the molded foam is released from the mold. In this step, the mold is cooled to a temperature equal to or lower than the Vicat softening point or crystallization temperature of the propylene-based polymer before opening of the mold to release the molded foam. Preferably, after the mold is cooled to a temperature lower by at least 30 °C than the Vicat softening point or crystallization temperature of the propylene-based polymer, the mold is opened to release the molded foam. A temperature higher than the upper limit defined above may increase the cooling time, leading to low production efficiency. The cooling time may vary depending on the cooling temperature and is typically about 1 to about 20 minutes. The cooling time is preferably 10 minutes or less when productivity is considered. The molded foam released from the mold does not shrink because the molded foam formed in a state in which the foamable composition is expanded to substantially completely fill the mold, is completely cooled in the mold before demolding.

A further aspect of the present disclosure provides a molded foam having a specific gravity of 0.3 or less produced by the method described above. The molded foam of the present disclosure has good dimensional stability and is applicable to low specific gravity applications because it undergoes no shrinkage.

The present disclosure has many advantages over the prior art including a bead foam process. First, the method of the present disclosure uses a heat source such as electricity to sufficiently increase the temperature of the mold. This enables the use of an inexpensive propylene homopolymer with high hardness to manufacture cost-competitive products with different high hardness values. Second, a small amount of the thermally expandable microspheres can be greatly expanded in the mold that can be evacuated to a vacuum. Third, the foamable composition starting from unexpanded particles or only slightly expanded particles has better thermal conductivity than EPP starting from prefoams. Due to its good thermal conductivity, the foamable composition is rapidly expanded. Therefore, the use of the foamable composition is advantageous in terms of energy efficiency. Fourth, the mold temperature can be raised to a sufficient level, achieving high adhesive strength between the expanded pellets. Therefore, high strength of the molded foam is ensured and the risk of defects during production can be reduced.

The method of the present disclosure enables the production of a low specific gravity molded foam with good dimensional stability and durability compared to conventional methods for producing molded foams including mixing a blowing agent and thermally expandable microspheres with a propylene polymer, expanding the mixture in a cylinder of an injection molding machine, injection molding the expanded mixture in a mold at room temperature, cooling the injection molded product, and demolding the final product.

The present disclosure will be more specifically explained with reference to the following examples. However, these examples are provided for ease of explanation and are not intended to limit the spirit of the present disclosure as defined in the accompanying claims.

### <EXAMPLES>

### 1) Raw materials for molded foams

The following raw materials were used to produce molded foams of Examples 1-6 and Comparative Examples 1-13:
i) Propylene polymers
   PP-1: Polypro 4017 (Korea Petrochemical Ind. Co., Ltd., Homopolymer, DSC melting point 165 °C, Vicat softening point 153 °C, MI (190 °C, 2.16 kg) 8.5 g/10 min, hardness R scale 100, specific gravity 0.90)
   PP-2: Polypro HJ4012 (Korea Petrochemical Ind. Co., Ltd., Homopolymer, DSC melting point 168 °C, Vicat softening point 156 °C, MI (190 °C, 2.16 kg) 14 g/10 min, hardness R scale 110, specific gravity 0.91)
   PP-3: Polypro RJ6308 (Korea Petrochemical Ind. Co., Ltd., Random Copolymer, DSC melting point 145 °C, Vicat softening point 135 °C, MI (190 °C, 2.16 kg) 10 g/10 min, hardness R scale 87, specific gravity 0.90)
ii) Thermally expandable microspheres
   TEMS-1: Expancel 950 DU 80 (Akzo Nobel, Tₛₜₐᵣₜ 143 °C, Tmax 195 °C)
   TEMS-2: Expancel 980 DU 120 (Akzo Nobel, Tₛₜₐᵣₜ 165 °C, Tmax 225 °C)
   TEMS-3: F260D (Matsumoto, Tₛₜₐᵣₜ 195 °C, Tₘₐₓ 255 °C)

### 2) Production of molded foams

The propylene polymers and the thermally expandable microspheres were mixed in Henschel mixers. The blending ratios of the raw materials are shown in Tables 1 and 2 . Each figure in the tables is expressed in parts by weight. Each of the mixtures was extruded with a co-rotating twin screw extruder (L/D=30/1) and underwater cut into 3-mm diameter pellets. The extrusion temperature was set to a temperature greater by 10 °C than the melting point of the propylene-based polymer measured by differential scanning calorimetry (DSC). The pellets were loaded into a mold (100 mm × 200 mm × 40 mm (volume 800 cc) between heating plates (optionally cooling plates) of a press equipped with a heating/cooling unit and a vacuum unit. The amounts of the pellets loaded into a mold are shown in Tables 1 and 2. The pellets were heated for 10 min while controlling the temperature of the mold and the degree of vacuum. Thereafter, the heating and evacuation were stopped. Cooling water valves of cooling plates (optionally heating plates) were opened to allow cooling water to flow until the mold temperature reached a temperature lower by at least 30 °C than the Vicat softening point of the propylene-based polymer. The resulting product was released from the mold.

**[Table 1]**

| | Comparative Example 1 | Comparative Example 2 | Example 1 | Comparative Example 3 | Example 2 | Comparative Example 4 | Example 3 | Comparative Example 5 | Comparative Example 6 | Comparative Example 7 |
|---|---|---|---|---|---|---|---|---|---|---|
| PP-1 | 100 | 100 | 100 | | | | | 100 | 100 | 100 |
| PP-2 | | | | 100 | 100 | | | | | |
| PP-3 | | | | | | 100 | 100 | | | |
| TEMS-1 | 10.0 | | | | | 10.0 | | | | |
| TEMS-2 | | 10.0 | | 10.0 | | | 10.0 | | | |
| TEMS-3 | | | 10.0 | | 10.0 | | | 10.0 | 10.0 | 10.0 |
| | | | | | | | | | | |
| Extrusion temp. (°C) | 175 | 175 | 175 | 178 | 178 | 155 | 155 | 175 | 175 | 175 |
| Specific gravity of pellets | (0.15) | (0.38) | 0.89 | (0.35) | 0.90 | (0.45) | 0.89 | 0.89 | 0.89 | 0.89 |
| Amount loaded into mold (g) | 40 | 40 | 40 | 40 | 40 | 40 | 40 | 40 | 40 | 32 |
| Mold temp. (°C) | 170 | 200 | 220 | 200 | 220 | 170 | 200 | (190) | (260) | 220 |
| Heating time (min) | 10 | 10 | 10 | 10 | 10 | 10 | 10 | 10 | 10 | 10 |
| Cooling temp. (°C) | 50 | 50 | 50 | 50 | 50 | 50 | 50 | 50 | 50 | 50 |
| Cooling time (min) | 10 | 10 | 10 | 10 | 10 | 10 | 10 | 10 | 10 | 10 |
| Evacuated? (Yes/No) | N | N | N | N | N | N | N | N | N | N |
| Foamed state | (unfoamed) | (unfoamed) | Good | (unfoamed) | Good | (unfoamed) | Good | (unfoamed) | (deformed, discolored and shrunk) | (insufficient amount) |
| Filling of expanded product in mold | (less filled) | (less filled) | Filled up | (less filled) | Filled up | (less filled) | Filled up | (less filled) | Filled up | (less filled) |
| Specific gravity of molded foam | | | 0.05 | | 0.05 | | 0.05 | 0.85 | 0.10 | 0.047 |
| Hardness of molded foam (Shore C) | | | 65 | | 70 | | 40 | | | |
| Suitability of molded foam | (unsuitable) | (unsuitable) | Suitable | (unsuitable) | Suitable | (unsuitable) | Suitable | (unsuitable) | (unsuitable) | (unsuitable) |

**[Table 2]**

| | Example 4 | Example 5 | Comparative Example 8 | Comparative Example 9 | Comparative Example 10 | Example 6 | Comparative Example 11 | Comparative Example 12 | Comparative Example 13 |
|---|---|---|---|---|---|---|---|---|---|
| PP-1 | 100 | 100 | | | | | | | 100 |
| PP-2 | | | | | | | | | |
| PP-3 | | | 100 | 100 | 100 | 100 | 100 | 100 | |
| TEMS-1 | | | | | | | | | |
| TEMS-2 | | | 10.0 | 10.0 | 10.0 | 10.0 | 10.0 | 10.0 | 10.0 |
| TEMS-3 | 10.0 | 13.0 | | | | | | | |
| | | | | | | | | | |
| Extrusion temp. (°C) | 175 | 175 | 155 | 155 | 155 | 155 | 155 | 155 | 175 |
| Specific gravity of pellets | 0.89 | 0.89 | 0.89 | 0.89 | 0.89 | 0.89 | 0.89 | 0.89 | (0.38) |
| Amount loaded into mold (g) | 32 | 32 | 40 | 40 | 32 | 32 | 40 | 40 | 40 |
| Mold temp. (°C) | 220 | 220 | (160) | (230) | 200 | 200 | | | 200 |
| Heating time (min) | 10 | 10 | 10 | 10 | 10 | 10 | 10 | 10 | 30 |
| Cooling temp. (°C) | 50 | 50 | 50 | 50 | 50 | 50 | 125 | 125 | 50 |
| Cooling time (min) | 10 | 10 | 10 | 10 | 10 | 10 | 10 | (30) | 10 |
| Evacuated? (Yes/No) | Y | N | | | N | Y | N | N | N |
| Foamed state | Good | Good | (unfoamed) | (deformed, discolored and shrunk) | (insufficient amount) | Good | (deformed) | Good | Good |
| Filling of expanded product in mold | Filled up | Filled up | (less filled) | Filled up | (less filled) | Filled up | Filled up | Filled up | Filled up |
| Specific gravity of molded foam | 0.04 | 0.04 | 0.85 | 0.11 | 0.045 | 0.04 | 0.047 | 0.05 | 0.05 |
| Hardness of molded foam (Shore C) | 52 | 53 | | | | 32 | | 40 | |
| Suitability of molded foam | Suitable | Suitable | (unsuitable) | (unsuitable) | (unsuitable) | Suitable | (unsuitable) | Suitable | (unsuitable) |

| | | | | | | | | | |
|---|---|---|---|---|---|---|---|---|---|
| * The numbers and descriptions in the parentheses indicate unsuitable physical properties. | | | | | | | | | |

## Claims

1. A method for producing a low specific gravity molded foam using a propylene-based polymer, comprising: providing a foamable composition comprising a mixture of a propylene-based polymer and thermally expandable microspheres; introducing the foamable composition into a mold for producing a molded foam; raising the temperature of the foamable composition to at least the expansion start temperature (Tₛₜₐᵣₜ) of the thermally expandable microspheres to expand the foamable composition in the mold; forming a molded foam in a state in which the foamable composition is expanded to fill the mold; and releasing the molded foam from the mold.

2. The method according to claim 1, wherein the foamable composition is prepared by extrusion of the mixture.

3. The method according to claim 1, wherein the foamable composition is in the form of pellets, rods or sheets.

4. The method according to claim 1, wherein the foamable composition is introduced in an amount to fill 30% or less of the volume of the mold.

5. The method according to claim 1, wherein the foamable composition introduced into the mold remains unfoamed or is only slightly foamed and the specific gravity of the only slightly foamed foamable composition is at least 51% of that of the unfoamed one.

6. The method according to claim 1, wherein the temperature of the foamable composition is raised by directly or indirectly heating the mold with a heat source.

7. The method according to claim 6, wherein the mold is heated to a temperature higher than 190 °C but lower than 230 °C.

8. The method according to claim 1, wherein the expansion start temperature (Tₛₜₐᵣₜ) of the thermally expandable microspheres is higher than the melting point of the propylene-based polymer measured by DSC.

9. The method according to claim 1, wherein the thermally expandable microspheres have shells composed of an acrylonitrile copolymer.

10. The method according to claim 1, wherein the inside of the mold is kept in a vacuum state during expansion of the foamable composition.

11. The method according to claim 1, wherein the molding temperature is maintained in a state in which the mold is substantially completely filled with the foamable composition to complete the molded foam, such that the volume ratio of the mold to the molded foam is 1:1 to 1:1.1.

12. The method according to claim 1, wherein the molded foam is demolded after complete cooling of the molded foam formed in a state in which the foamable composition is expanded to substantially completely fill the mold.

13. The method according to claim 12, wherein the mold is cooled to a temperature equal to or lower than the Vicat softening point or crystallization temperature of the propylene-based polymer before opening of the mold to release the molded foam.

14. The method according to claim 13, wherein the mold is cooled to a temperature lower by at least 30 °C than the Vicat softening point or crystallization temperature of the propylene-based polymer.

15. A molded foam having a specific gravity of 0.3 or less produced by the method according to any one of claims 1 to 14.
